# EUROPÄISCHE PATENTANMELDUNG

(11) **EP 0 563 964 A2**
(43) Veröffentlichungstag der Anmeldung: **06.10.1993**
(21) Anmeldenummer: 93105433.2
(22) Anmeldetag: 01.04.1993
(51) Int. Cl.: A61C 11/00

(54) **Zahnärztlicher Artikulator**

(30) Priorität: 02.04.1992 DE 4211006
(71) Anmelder: KALTENBACH & VOIGT GMBH & CO., D-88400 Biberach (DE)
(72) Erfinder: Lang, Hans Walter, W-7950 Leutkirch (DE); Straka, Alfred, W-7972 Isny (DE)
(74) Vertreter: Schmidt-Evers, Jürgen, Dipl.-Ing.

(57) **Zusammenfassung**

Bei einem zahnärztlichen Artikulator (1) mit einem Ständer (6) und zwei daran gehaltenen, sich in ihrer Arbeitsstellung nach vorne erstreckenden Artikulatorarmen (2,3), von denen der eine, insbesondere der obere Artikulatorarm (3) in seitlichen Gelenken (11) um eine horizontale, rechtwinklig zu einer sich von vorne nach hinten erstreckenden Vertikalebene verlaufende Schwenkachse (5) schwenkbar gelagert ist, wobei an den Artikulatorarmen (2,3) in deren Arbeitsstellung einander gegenüberliegend Zahnmodelle für einen Unterkiefer UK und/oder für einen Oberkiefer OK lösbar befestigbar sind, die rechte und linke Seite des Ständers (6) vorzugsweise symmetrisch aufwärts divergent angeordnet sind.

## Beschreibung

Die Erfindung bezieht sich auf einen zahnärztlichen Artikulator nach dem Oberbegriff des Anspruchs 1.

Ein solcher Artikulator hat zwei Hauptaufgaben zu erfüllen. Zum einen dient er als Bewegungssimulator für die UnterKieferbewegungen, wozu ein Unterkieferzahnmodell und eine Oberkieferzahnmodell an den einander zugewandten Seiten der Artikulatorarme befestigt werden. Zum anderen dient er als Traggestell für das Unterkieferzahnmodell und/oder das Oberkieferzahnmodell in Positionen, in denen sie beobachtet, vermessen, z.B. spanabhend bearbeitet oder auch andere Arbeiten daran ausgeführt werden können. Es ist dabei vorteilhaft, das Oberkieferzahnmodell und das Unterkieferzahnmodell in einer solchen Position im Artikulator räumlich anzuordnen, das die Okklussions-Ebene des Oberkieferzahnmodells in etwa horizontal verläuft. Bei einer auf einem Arbeitstisch stehenden Position des Artikulators sieht der Behandler, z.B. der Zahntechniker mit einer schräg nach unten geneigten Blickrichtung von etwa 45° zur Horizontalen auf die Zahnmodelle. Möchte der Behandler z.B. die Seitenflächen der Zahnmodelle in einer Blickrichtung senkrecht zu diesen Seitenflächen betrachten oder in einer solchen Position daran arbeiten, dann ist es erforderlich, den Artikulator mit einer Hand schräg zu stellen und in dieser Position zu halten. Dies ist kraftaufwendig und schwierig. Für andere Artikulatorstellungen ergeben sich ähnliche Probleme. Zur Lösung dieses Problems ist bereits vorgeschlagen worden, an einem Artikulator zusätzliche Stützarme aus- und einschwenkbar anzuordnen. Eine solche Ausgestaltung ist jedoch sehr herstellungs- und handhabungsaufwendig, weil die beweglichen Stützarme aus- und eingeschwenkt sowie in ihrer jeweiligen Stellung gesichert werden müssen.

Der Erfindung liegt die Aufgabe zugrunde, einen zahnärztlichen Artikulator der eingangs angegebenen Art so auszugestalten, daß er in wenigstens einer von der Normalstellung der Zahnmodelle abweichenden Stellung handhabungsfreundlich aufgestellt oder gehalten werden kann.

Diese Aufgabe wird durch die Merkmale der Ansprüche gelöst.

Bei einem erfindungsgemäßen Artikulator sind verschiedene Positionen für den Artikulatorarm möglich, in denen er selbständig auf einer ihn tragenden Platte oder einem Arbeitstisch zu stehen vermag oder in verschiedenen Stellungen zusätzlich mit der Hand gehalten werden kann. In letzteren Fällen ist er jedoch so gestaltet, daß die manuelle Halterung leicht und handhabungsfreundlich sowie ohne großen Kraftaufwand erfolgen kann. Hierdurch wird in jedem Falle die Positionierung des Artikulators in besonderen Schrägstellungen ermöglicht oder erleichtert. Vorzugsweise sind für diese besonderen Stellungen des Artikulators stabile Standverhältnisse vorgesehen, so daß der Behandler möglichst beide Hände frei hat und trotzdem die Zähnmodelle betrachten oder daran arbeiten kann.

Die erfindungsgemäßen Ausgestaltungen zeichnen sich auch durch einfache, leichte, praktische und kostengünstig herstellbare Bauweisen aus. Besondere Merkmale der Erfindung beziehen sich auch auf eine besondere Polsterung der Standflächen, so daß vom erfindungsgemäßen Artikulator wenig Gefahr einer Beschädigung des ihn tragenden Tisches ausgeht.

Nachfolgend werden die Erfindung und weitere durch sie erzielbare Vorteile anhand bevorzugter Ausführungsbeispiele und einer Zeichnung näher erläutert. Es zeigt:
**Fig.1** einen erfindungsgemäßen Artikulator in perspektivischer Front/Seitenansicht;
**Fig.2** den Artikulator in der Seitenansicht von links;
**Fig. 3 bis 9** den Artikulator in verschiedenen Arbeitsstellungen.

Von dem Artikulator 1 werden im folgenden nur die im vorliegenden Zusammenhang funktionswesentlichen Hauptteile beschrieben. Diese sind ein unterer Artikulatorarm 2 und ein oberer Artikulatorarm 3, von denen letzterer um eine sich von vorne nach hinten erstreckenden vertikalen Längsmittelebene des Artikulators 1 rechtwinklig erstreckende Schwenkachse 5 schwenkbar an einem U-förmigen Gestell oder Rahmen 6 mit zwei seitlichen sich aufwärts erstreckenden Rahmenschenkeln 7 schwenkbar gelagert ist. Die rahmenseitigen Schwenklagerteile 9 sind an den oberen Enden der Rahmenschenkel 7 angeordnet. Es handelt sich vorzugsweise um einen sogenannten Arcon-Artikulator mit Dreh- bzw. Schwenk-Schiebegelenken 11, von denen sich Schiebeführung 12 am oberen Artikulatorarm 3 befindet. Im hinteren bzw. mittleren Bereich der Artikulatorarme 2,3 sind an deren einander zugewandten Seiten jweils ein Anordnungsplatz 13 für zugehörige Zahnmodelle oder Zahnmodellsockelteile vorgesehen, die jeweils durch eine den Artikulatorarm 2,3 in einem Durchgangsloch durchfassende Schraube 15 und von den Artikulatorarmen 2,3 vorstehenden Paßstiften (nicht dargestellt) positionierbar und befestigbar sind. In den Figuren sind zwei Primärsockel 19 für ein Unterkiefer- und ein Oberkieferzahnmodell dargestellt. Am vorderen Ende des einen Artikulatorarms 2,3, hier des unteren Artikulatorarms 2, ist ein Inzisaltisch 21 befestigt, auf dem ein sich aufrecht erstreckender Stützstift 22 mit seinem freien Ende abgestützt ist, der am Ende des anderen Artikulatorarms, hier des oberen Artikulatorarms 3, lösbar befestigt ist. Vorzugsweise sind die Befestigungs- bzw. Aufnahmelemente für den Inzisaltisch 21 und den Stützstift 22 gleich oder zueinander passend, so daß der Inzisaltisch 21 und der Stützstift 22 jeweils in einander entgegengesetzten Positionen wahlweise am oberen oder am unteren Artikulatorarm 2,3 befestigbar sind. Zur Halterung dient jeweils ein vorzugweise sich in der Längsmittelebene erstreckender, den zugehörigen Artikulatorarm 2,3 vertikal durchsetzender und an seinem freien Ende ausmündender Paßschlitz 23a, 23b. In diese einander gleichen Paßschlitze ist wahlweise der Inzisaltisch 21 oder Stützstift 22 mit einer entsprechend passend geformten Taillierung bis zu miteinander übereinstimmenden Schlitzenden einschiebbar, die die Einschiebebewegung begrenzende Anschläge bilden.

Der Stützstift 22 weist an seinem Befestigungsende einen Flansch 26 auf, der auf seiner dem Befestigungsende zugewandten Seite einen Paßsteg trägt, dessen zueinander parallele und axparallele Paßflächen mit geringem Bewegungsspiel zwischen die seitlichen Schlitzwände passen. Vom Paßsteg ragt koaxial ein Gewindebolzen vor, dessen Länge größer bemessen ist, als die Dicke der Artikulatorarme 2,3 und auf dessen den zugehörigen Artikulatorarm überragenden Gewindeende eine manuell leicht zu betätigende Rändelmutter 31 so weit aufschraubbar ist, daß der Stützstift 22 im hier oberen Artikulatorm 3 festklemmbar ist. Auf der dem gerundeten freien Ende 32 des Stützstifts 22 zugewandten Seite befindet sich neben dem Flansch 26 eine Telekopiervorrichtung 33 mit einem Spindeltrieb für den Stützstift 22. Durch manuelles Verdrehen einer Gewinde- bzw. Spindelmutter ist das freie Ende 32 des Stützstifts 22 wahlweise aus- oder einschiebbar. Dabei ist das freie Ende 32 undrehbar längs geführt.

Der Inzisaltisch 21 kann zu seiner Befestigung ebenfalls einen Paßsteg und eine Schraub/Klemmverbindung entsprechend dem Stützstift 22 aufweisen. Bei der vorliegenden Ausgestaltung wird das Schraubteil durch einen zweiten Inzisaltisch 21b gebildet, der an der Unterseite des hier unteren Artikulatorarms 2 sitzt und mittels einem Gewindebolzen oder einem Gewindeloch an seiner Fußseite und einem Gewindebolzen oder einem Gewindeloch am oder im Paßsteg, hier des anderen Inzisaltisches 21a mit diesem verschraubbar und somit am hier unteren Artikulatorarm 2 klemmbar ist. Die Taillierung ist hier somit zwischen den beiden Inzisaltischen 21a, 21b ausgebildet.

Der Artikulator 1 besteht aus einem Unterteil 35, das den unteren Artikulatorarm 2, den Rahmen 6 und von den Innenseiten der Rahmenschenkel 7 koaxial nach innen vorspringende Gelenkköpfe 36 aufweist, und einem Oberteil 37, das den oberen Artikulatorarm 3, ein Gelenk-Nabenteil 38 und zwei daran seitlich befestigte Gelenkgehäuse 39 aufweist, in denen die Gelenkköpfe 36 in jeweils einem Schwenk-Schiebegelenk 11 gelagert sind. Das Oberteil 37 ist mittels den Gelenkgehäusen 39 zugeordneten zwei Zentrikschlössern 42 lösbar in dem Schwenk-Schiebegelenken 11 gehalten. Jedes Zentrikschloß 42 weist einen C-förmigen Schloßbügel 43 auf, der in seiner eingeschwenkten Schließstellung den zugehörigen Gelenkkopf 36 untergreift und hierdurch in der vorhandenen seitlich und nach unten offenen Gelenkausnehmung 40 sichert.

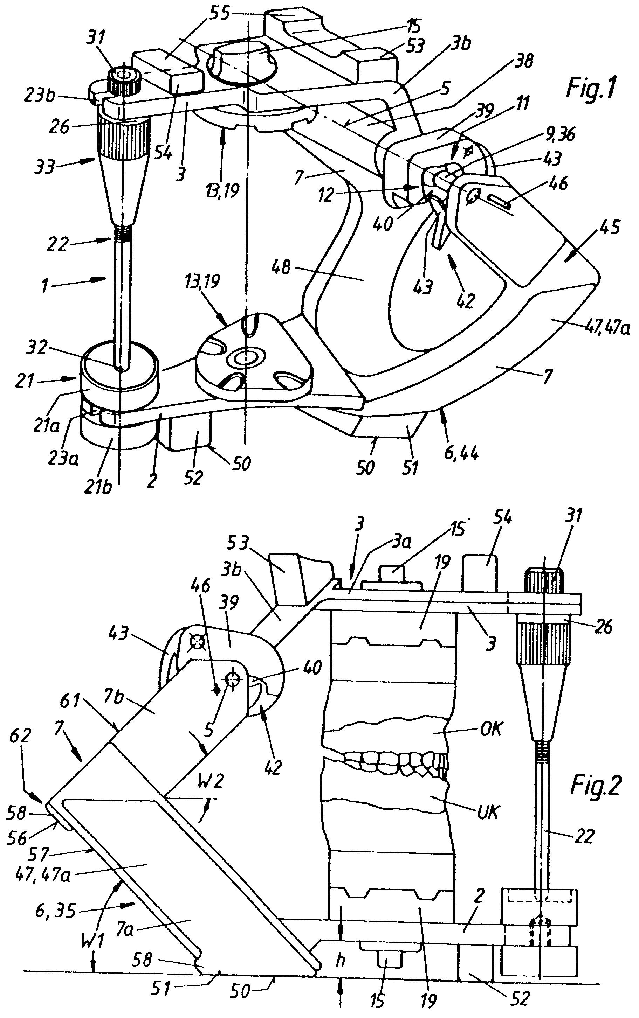

Der Rahmen 6 ist von besonderer Bauform. Er besteht aus einem - in der Vorder- oder Rückansicht gesehen - U-förmigen Bügel 44, dessen Bügelschenkel die Rahmenschenkel 7 bilden, wobei der letztere miteinander verbindende Bügelsteg halbkreisförmig gerundet ist. In der Seitenansicht gesehen sind die Rahmenschenkel 7 nach hinten ausgeknickt geformt, d.h. sie bestehen aus einem unteren Rahmenschenkelteil 7a, das sich unter einem Winkel W1 von etwa 45° nach hinten schräg aufwärts erstreckt, und einem oberen Rahmenschenkelteil 7b, das sich unter einem Winkel W2 von etwa 45° schräg aufwärts nach vorne erstreckt. Wie insbesondere aus Fig.1 deutlich zu entnehmen ist, erstreckt sich die Rundung des Bügels nur bis zu den sich ergebenden Knick- bzw. Scheitelpunkten der Rahmenschenkelteile 7a, 7b, wobei die oberen Rahmenschenkelteile 7b sich in zueinander parallelen vertikalen Ebenen schräg nach vorne erstrecken. Die oberen Rahmenschenkelteile 7b bestehen aus flachem oder im Querschnitt rechteckförmigem Material, das hochkannt angeordnet ist. Dabei sind die oberen Rahmenschenkelteile 7b dünner bemessen als die unteren Rahmenschenkelteile 7a bzw. der Bügel 44, wobei die Rahmenschenkelteile 7b innenseitig mit der zugehörigen Innenfläche des unteren Rahmenschenkelteils 7a bündig abschließen und außenseitig nach innen vorzugsweise stufenförmig zurückgesetzt sind. Hierdurch ist außenseitig neben den oberen Rahmenschenkelteilen 7b jeweils ein Rücksprung bzw. Freiraum 45 geschaffen. Hierdurch sind nahe unterhalb der Schwenkachse 5 befindliche, in axprallelen Stiftbohrungen von außen in die oberen Rahmenschenkelteile 7b fest eingesetzte Referenzstifte 46 für einen nicht-dargestellten Gesichtsbogen ganz oder wenigstens teilweise gegenüber der äußeren Seitenfläche 47 des unteren Rahmenschenkelteils 7a bzw. Bügels 44 versenkt angeordnet.

Der Bügel 44 ist in seiner Querschnittsform rechteckig, wobei die Schmalseiten nach hinten und nach vorne weisen. Dabei ist die Anordnung so getroffen, daß die im wesentlichen halbzylindrischen Innen- und Außenflächen 48,47 um eine in der vertikalen Mittelebene horizontal verlaufende Mittelachse gekrümmt sind. Der Bügel 44 ist somit mit einem aus einem Halbzylinder unter dem Winkel W1 schräg ausgeschnittenen Teil zu vergleichen.

Der Artikulator 1 weist mehrere Stell- bzw. Standebenen auf, die durch Körperflächen oder Fußflächen gebildet sein können. Eine erste Haupt-Standebene 50 befindet sich an der Unterseite des Unterteils 35, und sie wird durch zwei Fußstücke 51, 52 gebildet, von denen das hintere Fußstück 51 sich quer zur Längsmittelebene länglich erstreckt, an der Unterseite des Bügels 44 befestigt ist und in seinem mittleren Bereich unterseitig frei-geschnitten sein kann, so daß es unterseitig eben ist oder zwei seitliche Stützfüßchen aufweist. Oberseitig ist das Fußstück 51 in seiner Form an die Unterseite des Bügels 44 angepaßt und daran befestigt vorzugweise geklebt. Das vordere Fußstück 52 ist an der Unterseite des unteren Artikulatorarms 2 zwischen dem zugehörigen Anordnungsplatz 13 für einen Zahnmodellsockel und dem zugehörigen Schraubteil des Inzisaltisches 21 oder des Stützstifts 34 befestigt, ebenfalls vorzugsweise geklebt. Die Höhe h des vorderen Fußstücks 51 ist geringfügig größer bemessen als die Höhe des zugehörigen Schraubteils, hier des ein Schraubteil bildenden Inzisaltisches 21b. Dabei ist die Anordnung so getroffen, daß der untere Artikulatorarm und im weiteren auch der obere Artikulatorarm 3 sich horizontal erstrecken, wenn der Artikulator 1 auf seiner Haupt-Standebene 50 steht.

In entsprechender Position sind auf der Oberseite des oberen Artikulatorarms 3 ein hinteres und eine vorderes Fußstück 53, 54 befestigt, vorzugsweise geklebt, die eine Kopfstandebene 55 bilden, die sich parallel zur Ebene des oberen Artikulatorarms und vorzugsweise auch parallel zur Standebene 50 erstreckt. Das hintere Fußstück 53 ist ebenfalls ein länglicher, sich quer erstreckender Streifen, der im hinteren Endbereich des oberen Artikulatorarms 3 befestigt ist. Bei der vorliegenden Ausgestaltung ist der Artikulatorarm 3 mit einem vorderen Armschenkel 3a und einem hinteren Armschenkel 3b winkelförmig geformt, wobei diese beiden Schenkel einen stumpfen Winkel miteinander einschließen, so daß der hintere Armschenkel 3b sich schräg nach unten zum Nabenteil 38 erstreckt und daran befestigt ist. Das hintere Fußstück 53 ist im hinteren Endbereich des vorderen Armschenkels 3a befestigt. Die Fußstückpaare 51, 52; 53, 54, bilden jeweils eine sichere, ggfs. 3-punkförmige Standebene 50, 55 und einen stabilen Stand für den Artikulator 1.

Der Artikulator 1 weist an seiner Rückseite eine dritte Standebene 56 auf, die durch die sich nach hinten schräg aufwärts erstreckende Rückenfläche 57 der unteren Rahmenschenkelteile 7a, oder vorzugweise durch darauf befestigte Fußstücke 58 gebildet ist. Die unteren Fußstücke 58 können durch Teile des hinteren Fußstücks 51 gebildet sein.

Eine weitere rückseitige, vierte Standebene 61 ist an der durch die oberen Rahmenschenkelteile 7b gebildete, aufwärts schräg nach vorne erstreckende Rückseite des Artikulators 1 gebildet. Bei einem Stand auf dieser dritten Standebene 56 steht der Artikulator 1 beim vorliegenden Ausführungsbeispiel auf dem hinteren Fußstück 53 oder den Gehäusen 39 und den Ecken 62 der Rahmenschenkel 7 auf. Die Ecken 62 können ebenfalls mit kleinen Fußstücken besetzt sein. Die dritte Standebene 61 schließt mit der Haupt-Standebene 50 den Winkel W1 von etwa 45° ein. Der zwischen der dritten und der vierten Standebene 56, 61 eingeschlossene nach vorne offene Winkel beträgt etwa 90°. Die vierte Standebene 61 wird durch die in der Fig. 2 dargestellten Schloßbügel 43 nicht beeinträchtigt, weil dieser eingeschwenkt werden kann.

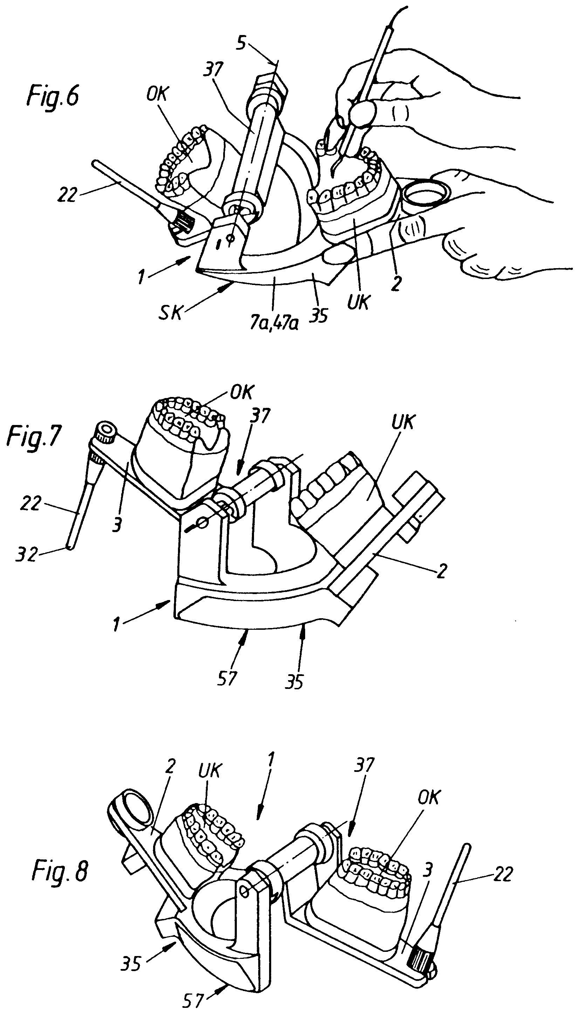

Der Artikulator 1 weist auch noch zwei seitliche, d.h. zur Seite hin gekippte Stell-bzw. Standmöglichkeiten auf, die sich dadurch ergeben, daß die Rahmenschenkel-teile 7a seitlich nach außen divergieren, hier gerundet sind. Durch seitliches Kippen kann der Artikulator 1 auf die Außenflächen 47 der unteren Rahmenschenkelteile 7a gestellt werden, wobei er eine seitlich um etwa 45° gekippte Position einnimmt (siehe Fig. 6).

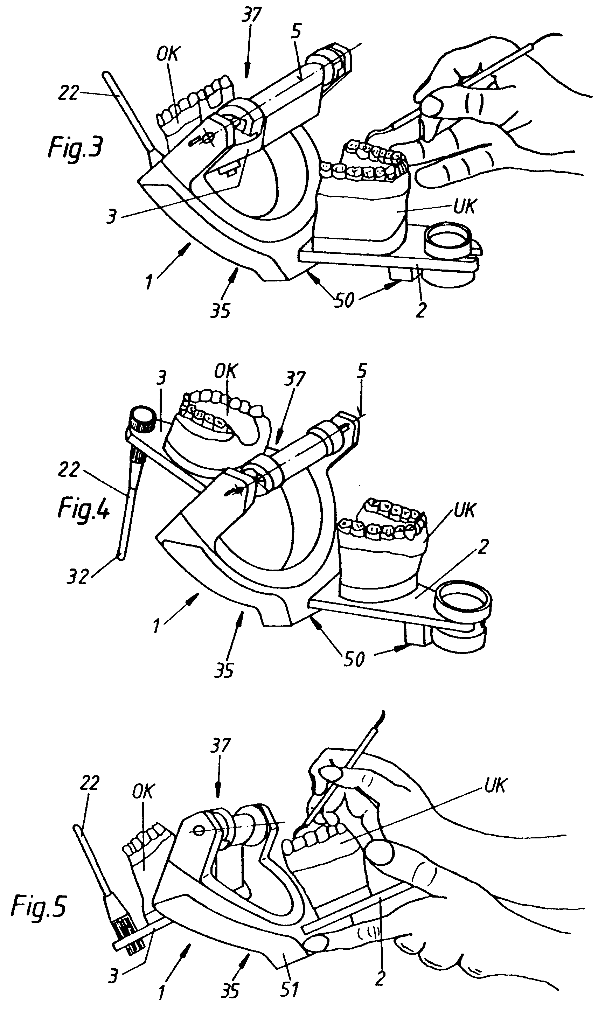

Im folgenden werden die Standmöglichkeiten des Artikulators 1 anhand der Figuren 3 und folgende kurz erklärt.

Gemäß. Fig. 3 steht de Artikulator 1 auf seiner Haupt-Standebene 50, wobei das Oberteil 37 nach hinten geklappt ist und mit dem freien Ende des oberen Artikulatorarms 3 auf der vorhandenen Tischfläche aufliegt. Der auf dem unteren Artikulatorarm 2 angeordnete Unterkiefer UK befindet sich in horizontaler Lage und ist vom Behandler in einer Blickrichtung von etwa 45° gut sichtbar. Dieser Stand eignet sich sehr gut für Arbeiten im Molarbereich des Unterkiefers UK auf der Zahnoberseite oder - in um 180° verdrehter Position des Artikulators 1 auf der Zahnoberseite des Oberkiefers OK.

Die Anordnung des Artikulators 1 nach Fig. 4 unterscheidet sich von der vorbeschriebenen dadurch, daß der Stützstift 22, der gem. Fig. 3 schräg nach oben ragt, umgekehrt montiert ist und mit seinem freien Ende als Abstützung auf der vorhanden Tischfläche für den sich schräg nach oben erstreckenden, zurückgeklappten oberen Artikulatorarm 3 dient, wobei das freie Ende des Stützstifts 22 auf der Tischfläche aufsteht. Bei dieser Anordnung sind die entsprechenden Kontrollpunkte am Oberkiefer OK, der am oberen Artikulatorarm 3 gehalten ist, vom Behandler gleichzeitig gut sichtbar. In einer um 180° verdrehten Position des Artikulators 1 ist der Frontbereich des Oberkiefers OK gut sichtbar und handhabungsfreundlich zu behandeln.

Bei der Anordnung des Artikulators nach Fig. 5 ist das Artikulator-Unterteil 35 ausgehend von einer Anordnung des Artikulators 1 nach Fig. 3 etwas auf dem Stützfuß 51 nach oben gekippt, wobei es in einer Hand des Behandlers abgestützt ist. In dieser Stellung ist die Vorderseite des Unterkiefers UK dem Behandler zugewandt.

Fig. 6 zeigt den Artikulator 1 in einer aus der Anordnung gem. Fig. 3 zur linken Seite hin gekippten Position, wobei das Unterteil 35 in einer seitlichen Kippstellung SK auf den Außenflächen 47 der unteren Rahmenschenkelteile 7a steht und dabei von einer am unteren Artikulatorarm 3 angreifenden Hand des Behandlers stabil gehalten werden kann. Vorzugsweise sind die Außenseiten 47 der Rahmenschenkelunterteile 7a mit einem dünnen Streifen 47a aus weich-elastischem Material wie Gummi oder dergleichen belegt, vorzugsweise daran festgeklebt ist. Hierdurch werden Beschädigungen auf der Tischfläche vermieden. Aus einem gleichen oder ähnlichen weichelastischem Material bestehen auch alle Fußstücke.

Bei der Anordnung des Artikulators 1 gem. Fig. 7 steht er auf der dritten Standebene 57, in der der Unterkiefer UK sich in einer um etwa 45° nach hinten gekippten Position befindet und deshalb der Frontbereich vom Behandler deutlich sichtbar ist. Die Kippung des Oberkiefers OK nach hinten erlaubt eine optimale Arbeitshaltung. Bei dieser Anordnung befindet sich der Stützstift 22 in einer Montageposition, in der sein freies Ende auf der Tischfläche aufsteht und den oberen Artikulatorarm 3 und den Oberkiefer 64 in einer um etwa 135° nach hinten geklappten Stellung hält. In dieser Stellung ist der Oberkiefer 64 vom Behandler gleichzeitig gut sichtbar, insbesondere die palatinale Führungsfläche.

Die Anordnung des Artikulators 1 gem. Fig. 8 unterscheidet sich von der vorbeschriebenen dadurch, daß zum einen der Artikulator 1 horizontal um 180° gedreht ist und zum anderen der Stützstift 22 umgekehrt montiert ist, so daß sein freies Ende schräg nach oben weist und der obere Artikulatorarm 3 mit seinem freien Ende auf der vorhandenen Tischfläche aufsteht. Hierdurch ergibt sich eine nach unten gekippte Position für den Oberkiefer OK, in der seine Zahnoberseite für den Behandler deutlich sichtbar ist. Dies gilt auch für den Unterkiefer UK, der sich ebenfalls in einer zum Behandler gekippten Position befindet.

Bei allen vorbeschriebenen Artikulator-Stellungen kann jeweils das Unterteil 35 und/oder das Oberteil 37 in unterschiedlichen Kippstellungen angeordnet werden, die sich um etwa 45° voneinander unterscheiden. Beim Unterteil 35 dient hierzu die Haupt-Standebene 50 und die rückseitige schräge Standebene 57. Beim Oberteil 37 ist zu Verwirklichung dieser beiden unterschiedlichen Kippstellungen der Stützstift 22 umzumontieren, so daß entweder der obere Artikulatorarm 3 mit seinem freien Ende oder das freie Ende des Stützstift 22 auf der vorhandenen Tischfläche abgestützt ist.

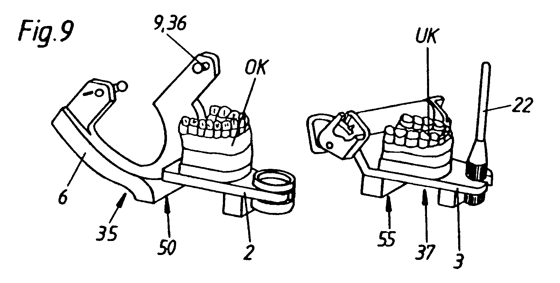

Bei der Anordnung nach Fig. 9 ist das Oberteil 37 vom Unterteil 35 demontiert und auf seine Kopfstandebene 55 neben dem Unterteil 37 gestellt. Auch in dieser Position können der Unter- und/oder Oberkiefer 63,64 handhabungsfreundlich ggfs. bei Nebeneinanderanordnung behandelt werden.

Die zweite Kopfstandebene 55 ermöglicht es, den Artikulator 1 auf den Kopf zu stellen (nicht dargestellt).

Eine vorteilhafte Befestigung für die Fußstücke 51 bis 54 kann auch darin bestehen, sie jeweils in eine zugehörige Ausnehmung einzustecken oder einzupressen oder gegebenenfalls darin zu verkleben

## Patentansprüche

1. Zahnärztlicher Artikulator (1) mit einem Ständer (6) und zwei daran gehaltenen, sich in ihrer Arbeitsstellung nach vorne erstreckenden Artikulatorarmen (2,3), von denen der eine, insbesondere der obere Artikulatorarm (3) in seitlichen Gelenken (11) um eine horizontale, rechtwinklig zu einer sich von vorne nach hinten erstreckenden Vertikalebene verlaufende Schwenkachse (5) schwenkbar gelagert ist, wobei an den Artikulatorarmen (2,3) in deren Arbeitsstellung einander gegenüberliegend Zahnmodelle für einen Unterkiefer (UK) und/oder für einen Oberkiefer (OK) lösbar befestigbar sind,
**dadurch gekennzeichnet**,
daß die rechte und linke Seite des Ständers (6) vorzugsweise symmetrisch aufwärts divergent angeordnet sind.

2. Artikulator nach Anspruch 1,
**dadurch gekennzeichnet**,
daß die divergenten Seiten durch seitliche Rahmenschenkel (7a) gebildet sind.

3. Artikulator nach Anspruch 2,
**dadurch gekennzeichnet**,
daß die Rahmenschenkel (7a) Teile eines U- oder V-förmigen Rahmens (6) sind.

4. Artikulator nach Anspruch 3,
**dadurch gekennzeichnet**,
daß der U-förmige Rahmen (6) in seinem unteren Endbereich vorzugsweise halbkreisförmig gerundet ist.

5. Artikulator nach Anspruch 3 oder 4,
**dadurch gekennzeichnet**,
daß der Rahmen (6) etwa in seiner unteren Hälfte U- oder V-förmig geformt ist und die oberen Rahmenschenkelteile (7b) in vertikalen Ebenen angeordnet sind.

6. Artikulator, insbesondere nach wenigstens einem der vorherigen Ansprüche,
**dadurch gekennzeichnet**,
daß die Gelenke (11) vom Ständer (6) koaxial aufeinanderzu gerichtete Gelenkkugelköpfe (9,36) aufweisen, die zugehörigen Gelenkkopfausnehmungen nach unten offen sind und durch bewegliche, insbesondere schwenkbar gelagerte und in ihrer Arbeitsstellung lösbar feststellbare Sicherungsbügel (43) von Zentrikschlössern (42) gehalten sind.

7. Artikulator nach Anspruch 6,
**dadurch gekennzeichnet**,
daß die Sicherungsbügel (43) axparallel zur vertikalen Mittelebene (4) zwischen einer Sicherungsstellung und einer Freigabestellung schwenkbar gelagert sind.

8. Artikulator, insbesondere nach wenigstens einem der vorherigen Ansprüche,
**dadurch gekennzeichnet**,
daß die Rückseite des Artikulators (1) wenigstens in ihrer etwa unteren Hälfte eine sich nach hinten schräg aufwärts erstreckende Standebene (56) für den Artikulator (1) oder sein Unterteil (35) bildet.

9. Artikulator nach wenigstens einem der vorherigen Ansprüche,
**dadurch gekennzeichnet**,
daß die Rückseite des Artikulators (1) wenigstens in ihrer etwa oberen Hälfte eine in seiner normalen Arbeitsstellung nach vorne schräg aufwärts verlaufende Standebene (61) für den Artikulator (1) bildet.

10. Artikulator nach wenigstens einem der vorherigen Ansprüche,
**dadurch gekennzeichnet**,
daß in dessen normaler Arbeitsstellung der untere Artikulatorarm (2) und vorzugsweise auch der obere Artikulatorarm (3) horizontal angeordnet sind. daß in dessen normaler Arbeitsstellung der untere Artikulatorarm (2) und vorzugsweise auch der obere Artikulatorarm (3) horizontal angeordnet sind.

11. Artikulator, insbesondere nach wenigstens einem der vorherigen Ansprüche,
**dadurch gekennzeichnet**,
daß der obere Artikulatorarm (3) soweit rückschwenkbar ist, daß sein freies Ende sich in der Nähe der vorhandenen Standfläche für den Artikulator (1) befindet, vorzugsweise darauf abstützt.

12. Artikulator nach wenigstens einem der vorherigen Ansprüche, wobei er einen im vorderen Bereich der Artikulatorarme (2,3) angeordneten sie voneinander distanzierenden Stützstift (22) aufweist, der lösbar vorzugsweise am oberen Artikulatorarm (3) befestigbar ist,
**dadurch gekennzeichnet**,
daß der Stützstift (22) wahlweise in Positionen am oberen und vorzugsweise auch am unteren Artikulatorarm (2,3) befestigbar ist, in denen sein freies Ende (32) in einander entgegengesetzte Richtungen weist.

13. Artikulator nach wenigstens einem der vorherigen Ansprüche,
**dadurch gekennzeichnet**,
daß an der Oberseite des oberen Artikulatorarms (3) eine weitere, in der normalen Arbeitsstellung des Artikulators (1) vorzugsweise horizontal erstreckende Kopfstand-Ebene (55) angeordnet ist.
